# EUROPÄISCHE PATENTSCHRIFT

(11) **EP 0 768 449 B1**
(45) Veröffentlichungstag und Bekanntmachung des Hinweises auf die Patenterteilung: **22.05.2002**
(21) Anmeldenummer: 96810598.1
(22) Anmeldetag: 09.09.1996
(51) Int. Cl.: F01K 23/16, F01K 23/10

(54) **Verfahren zum Betrieb einer Kraftwerksanlage**
Process for operating a power plant
Procédé de fonctionnement d'une centrale d'énergie

(30) Priorität: 10.10.1995 DE 19537637
(43) Veröffentlichungstag der Anmeldung: 16.04.1997
(73) Patentinhaber: Alstom, 75116 Paris (FR)
(72) Erfinder: Krakowitzer, Wilhelm, 5430 Wettingen (CH)
(74) Vertreter: Liebe, Rainer

(56) Entgegenhaltungen:
- DE-A- 2 137 977
- US-A- 5 042 246
- US-A- 5 203 160
- PATENT ABSTRACTS OF JAPAN vol. 013, no. 020 (M-785), 18.Januar 1989 & JP-A-63 230912 (TOSHIBA CORP), 27.September 1988,

## Beschreibung

### Technisches Gebiet

Die vorliegende Erfindung betrifft ein Verfahren zum Betrieb einer Kraftwerksanlage gemäss Oberbegriff des Anspruchs 1.

### Stand der Technik

Bei Kraftwerksanlagen, die mit einer Gasturbogruppe bestückt sind, kann das Anfahren (black start) der letztgenannten aus logistischen Gründen betreffend Beistellung des notwendigen Stromes etwelche Schwierigkeiten bereiten. Das ist immer dann der Fall, wenn die Anlage im Inselbetrieb betrieben wird und dementsprechend innerhalb dieser Infrastruktur angefahren werden soll. Bei solchen Anlagen ist es deshalb wichtig und naheliegend, dass das Anfahren keine allzu grosse elektrische Leistung beansprucht, da eine solche zunächst nur über eine autonome zusätzlche Stromerzeugungsmaschine beigebracht werden könnte. Liegt eine kleine oder mittlere Gasturbogruppe vor, so lässt sich die hierfür benötigte Anfahrleistung leicht durch konventionelle stromerzeugende Hilfsaggregate beistellen. Sobald aber grössere Gasturbogruppen angefahren werden müssen, steigen die dafür notwendigen Anfahrleistungen rasch an, dergestalt, dass Hilfsaggregate vorgesehen werden müssen, deren Kosten leicht ein Missverhältnis zu den Investitionskosten der ganzen Kraftwerksanlage darstellen können.

Selbst wenn die Gasturbogruppe über eine Verbundstromversorgung die dafür notwendige Anfahrleistung beziehen kann, so besteht auch hier immer noch die Gefahr, dass eine solche Spitze vom Stromnetz nicht ohne weiteres aufgefangen werden kann. Des weiteren, bei Gasturbogruppen der neueren Generation, welche einerseits durch spezifische Leistungen ab 150 MWe gekennzeichnet sind, und andererseits eine sequentielle Verbrennung mit einer einheitliche Rotorwelle aufweisen, sind die dafür erforderliche Anfahrleistungen gross, ohne weiteres in der Grössenordnung von 15 MVA. Bei dieser Ausgangslage hängt die Akzeptanz solcher Anlagen deshalb nicht zuletzt von der vorhandenen elektrischen Infrastruktur ab. Liegt keine oder eine ungenügende Infrastruktur vor, so bleiben die kommerziellen Möglichkeiten solcher Anlagen zunächst beschränkt. Ein Anfahren aus dem Stillstand beispielsweise durch Bereitstellung der Anfahrleistung über dieselangetriebene Motoren ist wirtschaftlich uninteressant.

Die Schrift US-A-5,203,160 offenbart ein Verfahren zum Betrieb einer Kraftwerksanlage, im wesentlichen bestehend aus einer Gasturbogruppe, einem Dampfkreislauf und einer Dampfturbine. Das Verfahren besteht darin die Dampfturbine beim Anfahren über ein Hilfsdampfsystem mit Dampf zu versorgen und auf diese Weise die gemeinsame Welle von Dampf- und Gasturbine zu kontrollieren.

### Darstellung der Erfindung

Hier will die Erfindung Abhilfe schaffen. Der Erfindung, wie sie in den Ansprüchen gekennzeichnet ist, liegt die Aufgabe zugrunde, bei einem Verfahren der eingangs genannten Art autarke Lösungen vorzuschlagen, welche eine zur Inbetriebsetzung einer Gasturbogruppe notwendige Anfahrleistung bereitzustellen vermögen.

Der wesentliche Vorteil der Erfindung ist darin zu sehen, dass eine im Zusammenhang mit der Gasturbogruppe vorgesehene Dampferzeugung direkt oder indirekt innerhalb der Kraftwerksanlage zum Anfahren der Gasturbogruppe herangezogen wird. Dabei ist davon auszugehen, dass es heutzutage keine reinen Gasturbogruppen mehr zur Inbetriebsetzung gelangen, bei welchen das Potential der Abgase aus der letzten Turbine unbenutzt bleibt, d.h. die Abgase in den Kamin geleitet werden.

Entweder werden diese Hochleistungs-Gasturbinen als Kombianlagen betrieben, oder stromab der Gasturbogruppe wird durch Ausnutzung des kalorischen Potentials ebendieser Abgase eine Dampferzeugung vorgesehen, deren Dampf beispielsweise zu Kühlzwecken der kalorisch beanspruchten Aggregate und/oder zur spezifischen Leistungssteigerung der Gasturbogruppe eingesetzt wird. Für die Umsetzung der Erfindung macht man sich des weiteren die Möglichkeit zunutze, dass die Abhitzedampferzeuger heute ohnehin des öfteren mit einer Zusatzfeuerung ausgestattet sind.

Diese Ausgangslage bietet somit die Möglichkeit, mit einer ersten Dampfmenge die Anfahrleistung bereitzustellen. Die einfachste Schaltung hierfür ist dann gegeben, wenn die Kraftwerksanlage als Kombianlage ausgelegt ist, da hier ohnehin eine Dampfturbine im Betrieb steht. Hier lässt sich über die Zusatzfeuerung des Abhitzedampferzeugers zunächst jene erste Dampfmenge erzeugen, welche zur Beaufschlagung der Dampfturbine eingesetzt wird. Durch direkten mechanischen Antrieb oder über die anfallende elektrische Leistung lässt sich die Gastubogruppe anfahren. Analog verhält es sich, wenn zwar kein Abhitzedampferzeuger vorhanden ist, dafür aber die Infrastruktur für eine sonstige Dampferzeugung zur Verfügung steht, wobei im letztgenannten Fall die dann ebenso erforderliche Dampfturbine entsprechend der minimal notwendigen Anfahrleistung ausgelegt werden kann.

Vorteilhafte und zweckmässige Weiterbildungen der erfindungsgemässen Aufgabenlösung sind in den weiteren Ansprüchen gekennzeichnet.

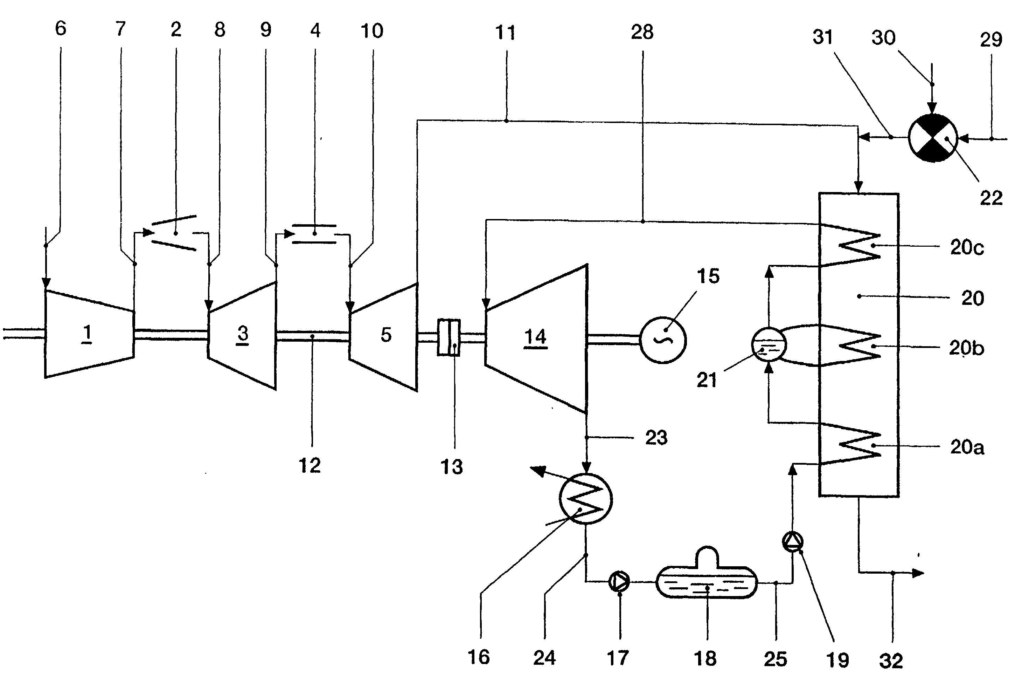

Im folgenden wird anhand der Zeichnung ein Ausführungsbeispiel der Erfindung näher erläutert. Alle für das unmittelbare Verständnis der Erfindung nicht erforderlichen Merkmale sind fortgelassen worden. Die Strömungsrichtung der Medien ist mit Pfeilen angegeben.

### Kurze Beschreibung der Zeichnung

Die einzige Figur zeigt die Schaltung einer Kombianlage, deren Betrieb auf die Bereitstellung der zum Start der Gasturbogruppe notwendigen Anfahrleistung erweitert ist.

### Wege zur Ausführung der Erfindung, gewerbliche Verwendbarkeit

Die Figur zeigt eine Kombianlage, welche aus einer Gasturbine, einem der Gasturbine nachgeschalteten Abhitzedampferzeuger, einer mit dem Dampf aus dem Abhitzedampferzeuger betreibbare Dampfturbine und mindestens einer elektrischen Maschine besteht.

Die vorliegenden Gasturbogruppe ist auf einer sequentiellen Verbrennung aufgebaut. Die in der Figur nicht ersichtliche Bereitstellung des zum Betrieb der verschiedenen Brennkammern notwendigen Brennstoffes kann beispielsweise durch eine mit der Gasturbogruppe zusammenwirkende Kohlenvergasung bewerkstelligt werden. Selbstverständlich ist es auch möglich, den zum Einsatz gelangenden Brennstoff aus einem Primärnetz zu beziehen. Wird die Versorgung eines gasförmigen Brennstoffes zum Betrieb der Gasturbogruppe über eine Pipeline bereitgestellt, so kann das Potential aus der Druck- und/oder Temperaturdifferenz zwischen Primärnetz und Verbrauchernetz für die Belange der Gasturbogruppe, oder allgemein der Schaltung, rekuperiert werden. Die vorliegende Gasturbogruppe, als autonome Einheit betrachtet, besteht aus einem Verdichter 1, einer dem Verdichter nachgeschalteten ersten Brennkammer 2, einer dieser Brennkammer 2 nachgeschalteten ersten Turbine 3, einer dieser Turbine 3 nachgeschalteten zweiten Brennkammer 4 und einer dieser Brennkammer 4 nachgeschalteten zweiten Turbine 5. Die genannten Strömungsmaschinen 1, 3, 5 weisen eine einheitliche Rotorwelle 12 auf. Diese Rotorwelle 12 selbst ist vorzugsweise auf zwei in der Figur nicht ersichtlichen Lagern gelagert, welche kopfseitig des Verdichters 1 und stromab der zweiten Turbine 5 plaziert sind. Der Verdichter 1 kann je nach Auslegung, beispielsweise um die spezifische Leistung zu erhöhen, in zwei nicht gezeigte Teilverdichter unterteilt werden. Bei einer solchen Konstellation wird dann stromab des ersten Verdichters und stromauf des zweiten Verdichters ein Zwischenkühler geschaltet, in welchem die teilverdichtete Luft zwischengekühlt wird. Die in diesem ebenfalls nicht gezeigten Zwischenkühler anfallende Wärme wird optimal, also nutzbringend, in den Prozess rückgeführt. Die angesaugte Luft 6 strömt als verdichtete Luft 7 in ein nicht näher gezeigtes Gehäuse, das in sich den Verdichteraustritt und die erste Turbine 3 einschliesst. Im diesem Gehäuse ist auch die erste Brennkammer 2 untergebracht, welche vorzugsweise als zusammenhängende Ringbrennkammer ausgebildet ist. Selbsverständlich kann die verdichtete Luft 7 zur ersten Brennkammer 2 aus einer nicht gezeigten Luftspeicheranlage beigestellt werden. Die Ringbrennkammer 2 weist kopfseitig, auf den Umfang verteilt, eine Anzahl von nicht näher gezeigten Brennern auf, welche vorzugsweise als Vormischbrenner ausgelegt sind. An sich können hier auch Diffusionsbrenner zum Einsatz gelangen. Im Sinne einer Reduzierung der Schadstoff-Emissionen aus dieser Verbrennung, insbesondere was die NOx-Emissionen betrifft, ist es indessen vorteilhaft, eine Anordnung von Vormischbrennern gemäss EP-A1-0 321 809 vorzusehen, wobei der Erfindungsgegenstand aus der genannten Druckschrift integrierender Bestandteil dieser Beschreibung ist, darüber hinaus auch die dort beschriebene Art der Brennstoffzuführung. Was die Anordnung der Vormischbrenner in Umfangsrichtung der Ringbrennkammer 2 anbelangt, so kann eine solche bei Bedarf von der üblichen Konfiguration gleicher Brenner abweichen, und stattdessen können unterschiedlich grosse Vormischbrenner zum Einsatz kommen. Dies geschieht vorzugsweise so, dass jeweils zwischen zwei grossen Vormischbrennern ein kleiner Vormischbrenner gleicher Konfiguration disponiert ist. Die grossen Vormischbrenner, welche die Funktion von Hauptbrennern zu erfüllen haben, stehen zu den kleinen Vormischbrennern, welche die Pilotbrenner dieser Brennkammer sind, bezüglich der sie durchströmenden Brennerluft, also der verdichteten Luft aus dem Verdichter 1, in einem Grössenverhältnis zueinander, das fallweise festgelegt wird. Im gesamten Lastbereich der Brennkammer arbeiten die Pilotbrenner als selbstgängige Vormischbrenner, wobei die Luftzahl fast konstant bleibt. Die Zu- oder Abschaltung der Hauptbrenner erfolgt nach bestimmten anlagespezifischen Vorgaben. Weil die Pilotbrenner im ganzen Lastbereich bei idealem Gemisch gefahren werden können, sind die NOx-Emissionen auch bei Teillast sehr gering. Bei einer solchen Konstellation kommen die umlaufenden Stromlinien im Frontbereich der Ringbrennkammer 2 sehr nahe an die Wirbelzentren der Pilotbrenner heran, so dass eine Zündung an sich nur mit diesen Pilotbrennern möglich ist. Beim Hochfahren wird die Brennstoffmenge, die über die Pilotbrenner zugeführt wird, soweit gesteigert, bis diese angesteuert sind, d.h. bis die volle Brennstoffmenge zur Verfügung steht. Die Konfiguration wird so gewählt, dass dieser Punkt der jeweiligen Lastabwurfbedingungen der Gasturbogruppe entspricht. Die weitere Leistungssteigerung erfolgt dann über die Hauptbrenner. Bei der Spitzenlast der Gasturbogruppe sind sonach auch die Hauptbrenner voll angesteuert. Weil die durch die Pilotbrenner inizierte Konfiguration "kleiner" heisser Wirbelzentren zwischen den von den Hauptbrennern stammenden "grossen" kühleren Wirbelzentren extrem instabil ausfällt, wird auch bei mager betriebenen Hauptbrennern im Teillastbereich ein sehr guter Ausbrand mit zusätzlich zu den NOx-Emissionen niedrigen CO- und UHC-Emissionen erreicht, d.h. die heissen Wirbel der Pilotbrenner dringen sofort in die kleinen Wirbel der Hauptbrenner ein. Selbstverständlich kann die Ringbrennkammer 2 aus einer Anzahl einzelner rohrförmiger Brennräume bestehen, welche ebenfalls schrägringförmig, bisweilen auch schraubenförmig, um die Rotorachse angeordnet sind. Diese Ringbrennkammer 2, unabhängig von ihrer Auslegung, wird und kann geometrisch so angeordnet werden, dass sie auf die Rotorlänge praktisch keinen Einfluss ausübt. Die Heissgasen 8 aus dieser Ringbrennkammer 2 beaufschlagen die unmittelbar nachgeschaltete erste Turbine 3, deren kalorisch entspannende Wirkung auf die Heissgase bewusst minimal gehalten wird, d.h. diese Turbine 4 wird demnach aus nicht mehr als zwei Laufschaufelreihen bestehen. Bei einer solchen Turbine 3 wird nötig sein, einen Druckausgleich an den Stirnflächen zwecks Stabilisierung des Axialschubes vorzusehen. Die in der Turbine 3 teilentspannten Heissgase 9, welche unmittelbar in die zweite Brennkammer 4 strömen, weisen aus dargelegten Gründen eine recht hohe Temperatur auf, vorzugsweise ist sie betreibungsspezifisch so auszulegen, dass sie sicher noch um 1000°C beträgt. Diese zweite Brennkammer 4 hat im wesentlichen die Form eines zusammenhängenden ringförmigen axialen oder quasi-axialen Zylinders. Diese Brennkammer 4 kann selbstverständlich auch aus einer Anzahl axial, quasi-axial oder schraubenförmig angeordneten und in sich abgeschlossenen Brennräumen bestehen. Was die Konfiguration der ringförmigen, aus einem einzigen Brennraum bestehenden Brennkammer 4 betrifft, so sind in Umfangsrichtung und radial dieses ringförmigen Zylinders mehrere in der Figur nicht näher gezeigten Brennstofflanzen disponiert. Diese Brennkammer 4 weist keinen Brenner auf: Die Verbrennung des in die aus der Turbine 3 kommenden teilentspannten Heissgase 9 eingedüsten Brennstoffes geschieht hier durch Selbstzündung, soweit freilich das Temperaturniveau eine solche Betreibungsart zulässt. Ausgehend davon, dass die Brennkammer 4 mit einem gasförmigen Brennstoff, also beispielsweise Erdgas, betrieben wird, muss für eine Selbstzündung eine Temperatur der teilentspannten Heissgase 9 aus der Turbine 3 um die 1000°C vorliegen. Demnach, um Selbstzündung eines Erdgases in der Brennkammer 4 sicherzustellen, muss die Austrittstemperatur der teilentspannten Heissgase 9 aus der Turbine 3 noch sehr hoch sein, wie oben dargelegt um die 1000°C, und dies selbstverständlich auch bei Teillastbetrieb, was auf die Auslegung dieser Turbine 2 eine ursächliche Rolle spielt. Um die Betriebssicherheit und einen hohen Wirkungsgrad bei einer auf Selbstzündung ausgelegten Brennkammer zu gewährleisten, ist es eminent wichtig, dass die Flammenfront ortsmässig stabil bleibt. Zu diesem Zweck werden in dieser Brennkammer 4, vorzugsweise an der Innen- und Aussenwand in Umfangsrichtung disponiert, eine Reihe von nicht näher gezeigten Elementen vorgesehen, welche in axialer Richtung vorzugsweise stromauf der Brennstofflanzen plaziert sind. Die Aufgabe dieser Elemente besteht darin, Wirbel zu erzeugen, welche eine Rückströmzone, analog derjenige in den bereits erwähnten Vormischbrennern, induzieren. Da es sich bei dieser Brennkammer 4, aufgrund der axialen Anordnung und der Baulänge, um eine Hochgeschwindigkeitsbrennkammer handelt, bei welcher die mittlere Geschwindigkeit der Arbeitsgase grösser ca. 60 m/s ist, müssen die wirbelerzeugenden Elemente strömungskonform ausgebildet werden. Anströmungsseitig sollen diese vorzugsweise aus einer tetraederförmigen Form mit anströmungsschiefen Flächen bestehen. Die wirbelerzeugenden Elemente können entweder an der Aussenfläche und/oder an der Innenfläche plaziert sein. Selbstverständlich können die wirbelerzeugenden Elemente auch axial zueinander verschoben sein. Die abströmungsseitige Fläche der wirbelerzeugenden Elemente ist im wesentlichen radial ausgebildet, so dass sich ab dort eine Rückströmzone einstellt. Die Selbstzündung in der Brennkammer 4 muss indessen auch in den transienten Lastbereichen sowie im Teillastbereich der Gasturbogruppe gesichert bleiben, d.h., es müssen Hilfsvorkehrungen vorgesehen werden, welche die Selbstzündung in der Brennkammer 4 auch dann sicherstellen, wenn sich eine Flexion der Temperatur der Gase im Bereich der Eindüsung des Brennstoffes einstellen sollte. Um eine sichere Selbstzündung des in die Brennkammer 4 eingedüsten gasförmigen Brennstoffes zu gewährleisten, wird diesem eine kleine Menge eines anderen Brennstoffes mit einer niedrigeren Zündtemperatur beigegeben. Als "Hilfsbrennstoff" eignet sich hier beispielsweise Brennöl sehr gut. Der flüssige Hilfsbrennstoff, entsprechend eingedüst, erfüllt die Aufgabe, sozusagen als Zündschnur zu wirken, und ermöglicht auch dann eine Selbstzündung in der Brennkammer 4, wenn die teilentspannten Heissgase 9 aus der ersten Turbine 3 eine Temperatur unterhalb des angestrebten optimalen Niveaus von 1000°C aufweisen sollten. Diese Vorkehrung, Brennöl zur Sicherstellung einer Selbstzündung vorzusehen, erweist sich freilich immer dann als besonders angebracht, wenn die Gasturbogruppe mit reduzierter Last betrieben wird. Diese Vorkehrung trägt des weiteren entscheidend dazu bei, dass die Brennkammer 4 eine minimale axiale Länge aufweisen kann. Die kurze Baulänge der Brennkammer 4, die Wirkung der wirbelerzeugenden Elemente zur Flammenstabilisierung sowie die fortwährende Sicherstellung der Selbstzündung sind demnach dafür verantwortlich, dass die Verbrennung sehr rasch erfolgt, und die Verweilzeit des Brennstoffes im Bereich der heissen Flammenfront minimal bleibt. Eine unmittelbar verbrennungsspezifisch messbare Wirkung hieraus betrifft die NOx-Emissionen, welche eine Minimierung erfahren, dergestalt, dass sie nunmehr kein Thema mehr bilden. Diese Ausgangslage ermöglicht ferner, den Ort der Verbrennung klar zu definieren, was sich auf eine optimierte Kühlung der Strukturen dieser Brennkammer 4 niederschlägt. Die in der Brennkammer 4 aufbereiteten Heissgase 10 beaufschlagen anschliessend eine nachgeschaltete zweite Turbine 5. Die thermodynamischen Kennwerte der Gasturbogruppe können so ausgelegt werden, dass die Abgase 11 aus der zweiten Turbine 5 noch soviel kalorisches Potential aufweisen, um damit den hier dargestellten Dampfkreislauf zu betreiben. Wie bereits bei der Beschreibung der Ringbrennkammer 2 hingewiesen wurde, ist diese geometrisch so angeordnet, dass sie auf die Rotorlänge der Gasturbogruppe praktisch keinen Einfluss ausübt. Des weiteren ist feststellbar, dass die zweite zwischen Abströmungsebene der ersten Turbine 3 und Anströmungsebene der zweiten Turbine 5 verlaufende Brennkammer 4 eine minimale Länge aufweist. Da ferner die Entspannung der Heissgase in der ersten Turbine 3, aus dargelegten Gründen, über wenige Laufschaufelreihen erfolgt, lässt sich eine Gasturbogruppe bereitstellen, deren Rotorwelle 12 aufgrund ihrer minimierten Länge technisch einwandfrei auf zwei Lagern abstützbar ist. Turbinenseitig 5 weist die Rotorwelle 12 eine Kupplung 13 auf, welche eine Dampfturbine 14 mit der Gasturbogruppe koppelt. Die Leistungsabgabe der Strömungsmaschinen geschieht über einen angekoppelten Generator 15, der auch als Anwurfmotor dienen kann. Nach Entspannung in der Turbine 5 durchströmen die noch mit einem hohen kalorischen Potential versehenen Abgase 11 einen Abhitzedampferzeuger 20, in welchem in Wärmetauschverfahren Dampf 28 erzeugt wird, der dann das Arbeitsmedium des nachgeschalteten Dampfkreislaufes bildet. Die kalorisch ausgenutzten Abgase strömen anschliessend als Rauchgase 32 ins Freie. Beim hier gezeigten Abhitzedampferzeuger 20 handelt es sich um eine Eindruckausführung mit einer Trommel 21. Selbstverständlich können auch Mehrdruck-Abhitzedampferzeuger vorgesehen werden. Ueber einen Economizer 20a, eine Niederdruckdampfstufe 20b und Ueberhitzerdampfstufe 20c, in Wirkverbindung mit der genannten Trommel 21, wird ein Hochdruckdampf 28 erzeugt, der dann die Dampfturbine 14 beaufschlägt. Der entspannte Dampf 23 wird in einem wasser- oder luftgekühlten Kondensator 16 kondensiert. Durch eine stromab dieses Kondensators 16 wirkende Kondensatpumpe 17 wird das Kondensat 24 in einen Speisewasserbehälter und Entgaser 18 gefördert. Eine weitere stromab wirkende Förderpumpe 19 pumpt sodann das Wasser 25 in den Economizer 20a des Abhitzedampferzeugers 20, womit der Kreislauf von Neuem beginnt kann. Der Abhitzedampferzeuger 20 ist mit einem Zwischenüberhitzer 22 erweitert, der entweder im Zusammenwirken mit dem jeweiligen Abhitzedampferzeuger 20 oder autonom betrieben wird. In der Figur ist die letztgenannte Möglichkeit gezeigt: Die Verbrennungsluft 29 wird mit einem Brennstoff 30 gemischt, und die aus der anschliessenden Verbrennung gebildeten Heissgase 31 werden in den Abhitzedampferzeuger 20 geleitet, in welchem die bereits beschriebene Dampferzeugung stattfindet. Soll die Anlage, d.h. die Gasturbogruppe, aus dem Stillstand in Betrieb gesetzt werden, so wird der Zwischenüberhitzer 22 gezündet. Die über den bereits gewürdigten Kreislauf gebildete Dampfmenge beaufschlagt die Dampfturbine 14, welche die Anfahrleistung der mit ihr gekoppelten Gasturbogruppe erbringt. Sobald der von den Abgasen 11 aus der Turbine 5 gebildete Dampf 28 die Aufrechterhaltung der Inbetriebsetzung der Gasturbogruppe zulässt, kann der Zwischenüberhitzer 22 ausser Betrieb genommen werden. Liegt eine Kopplung zwischen Gasturbogruppe und Dampfturbine 14 aus irgendeinem Grund nicht vor, so wird der mit der ersten Dampfmenge in der Dampfturbine 14 erzeugte Strom zum Anfahren der Gasturbogruppe eingesetzt, wobei in einem solchen Fall eine zusätzliche elektrische Maschine zu diesem Zweck notwendig ist.

### Bezugszeichenliste

- 1: Verdichter
- 2: Erste Brennkammer
- 3: Erste Turbine
- 4: Zweite Brennkammer
- 5: Zweite Turbine
- 6: Ansaugluft
- 7: Verdichtete Luft
- 8: Heissgase
- 9: Teilenspannte Heissgase
- 10: Heissgase
- 11: Abgase
- 12: Rotorwelle
- 13: Kupplung
- 14: Dampfturbine
- 15: Elektrische Maschine, Generator
- 16: Kondensator
- 17: Förderpumpe
- 18: Speisewasserbehälter und Entgaser
- 19: Förderpumpe
- 20: Abhitzedampferzeuger
- 20a: Economizer
- 20b: Niederdruckdampfstufe
- 20c: Ueberhitzerdampfstufe
- 21: Trommel
- 22: Zwischenüberhitzer
- 23: Entspannter Dampf
- 24: Kondensat
- 25: Wasser
- 28: Hochdruckdampf
- 29: Verbrennungsluft
- 30: Brennstoff
- 31: Heissgase
- 32: Rauchgase

## Patentansprüche

1. Verfahren zum Betrieb einer Kraftwerksanlage, im wesentlichen bestehend aus eine Gasturbogruppe, einem Dampfkreislauf und einer Dampfturbine (14), wobei zur Erzeugung einer Leistung zum Anfahren der Gastubogruppe unter Einbezug des Dampfkreislaufes eine erste Dampfmenge (28) gebildet wird, wobei diese Dampfmenge die Dampfturbine (14) beaufschlagt, und wobei die aus der Beaufschlagung der Dampfturbine (14) resultierende Leistung direkt oder indirekt in die Gasturbogruppe zur Erbringung der notwendigen Anfahrleistung überführt wird
**dadurch gekennzeichnet, dass**
ein Zwischenüberhitzer (22) Heissgase (31) bildet, dass diese Heissgase durch einen zum Dampfkreislauf gehörigen Abhitzedampferzeuger (20) geleitet werden, und dass die im Abhitzedampferzeuger gebildete erste Dampfmenge (28) in die Dampfturbine (14) eingeleitet wird.

2. Verfahren nach Anspruch 1, **dadurch gekennzeichnet, dass** die Ueberführung der Anfahrleistung von der Dampfturbine (14) in die Gasturbogruppe durch Koppelung der Dampfturbine (14) mit einer zur Gasturbogruppe gehörigen Rotorwelle (12) vorgenommen wird.

3. Verfahren nach Anspruch 1, **dadurch gekennzeichnet, dass** bei einem autonomen, losgelösten Betrieb der Dampfturbine (14) gegenüber der Gasturbogruppe die von der ersten Dampfmenge (28) in einem zur Dampfturbine (14) gehörigen Generator (15) gebildeten Strom zum Antrieb einer zur Gasturbogruppe gehörigen elektrischen Maschine überführt wird.

4. Verfahren nach Anspruch 1, **dadurch gekennzeichnet, dass** die Gasturbogruppe mit einer sequentiellen Verbrennung betrieben wird.

## Claims

1. Method for operating a power station, essentially consisting of a gas turbine group, of a steam circuit and of a steam turbine (14), a first steam quantity (28) being formed in order to generate power for starting up the gas turbine group, including the steam circuit, this steam quantity charging the steam turbine (14), and the power resulting from the charging of the steam turbine (14) being transferred directly or indirectly into the gas turbine group for the purpose of furnishing the necessary startup power, **characterized in that** an intermediate superheater (22) forms hot gases (31), **in that** these hot gases are routed through a waste-heat steam generator (20) belonging to the steam circuit, and **in that** the first steam quantity (28) formed in the waste-heat steam generator is introduced into the steam turbine (14).

2. Method according to Claim 1, **characterized in that** the transfer of the startup power from the steam turbine (14) into the gas turbine group is carried out by coupling the steam turbine (14) to a rotor shaft (12) belonging to the gas turbine group.

3. Method according to Claim 1, **characterized in that**, in the event of an independent operation of the steam turbine (14) dissociated from the gas turbine group, the current formed by the first steam quantity (28) in a generator (15) belonging to the steam turbine (14) is transferred for the purpose of driving an electric machine belonging to the gas turbine group.

4. Method according to Claim 1, **characterized in that** the gas turbine group is operated by sequential combustion.

## Revendications

1. Procédé pour la conduite d'une installation de centrale électrique, composée essentiellement d'un turbogroupe à gaz, d'un circuit de vapeur et d'une turbine à vapeur (14), dans lequel on forme une première quantité de vapeur (28) pour produire une puissance destinée au démarrage du turbogroupe à gaz en faisant appel au circuit de vapeur, dans lequel cette quantité de vapeur alimente la turbine à vapeur (14), et dans lequel la puissance résultant de l'alimentation de la turbine à vapeur (14) est transmise directement ou indirectement dans le turbogroupe à gaz en vue de produire la puissance de démarrage nécessaire, **caractérisé en ce qu'**un surchauffeur intermédiaire (22) forme des gaz chauds (31), **en ce que** ces gaz chauds sont conduits à travers un générateur de vapeur à chaleur perdue (20) faisant partie du circuit de vapeur, et **en ce que** la première quantité de vapeur (28) formée dans le générateur de vapeur à chaleur perdue est introduite dans la turbine à vapeur (14).

2. Procédé suivant la revendication 1, **caractérisé en ce que** la transmission de la puissance de démarrage de la turbine à vapeur (14) dans le turbogroupe est effectuée par l'accouplement de la turbine à vapeur (14) avec un arbre de rotor (12) faisant partie du turbogroupe à gaz.

3. Procédé suivant la revendication 1, **caractérisé en ce que**, lors d'un fonctionnement autonome, séparé, de la turbine à vapeur (14) par rapport au turbogroupe à gaz, le courant produit par la première quantité de vapeur (28) dans un générateur (15) faisant partie de la turbine à vapeur (14) est transmis pour entraîner une machine électrique faisant partie du turbogroupe à gaz.

4. Procédé suivant la revendication 1, **caractérisé en ce que** le turbogroupe à gaz fonctionne avec une combustion séquentielle.
